# EUROPEAN PATENT SPECIFICATION

(11) **EP 1 074 430 B1**
(45) Date of publication and mention of the grant of the patent: **17.10.2007**
(21) Application number: 99115392.5
(22) Date of filing: 04.08.1999
(51) Int. Cl.: B60Q 1/52, G01S 13/93

(54) **Imaging system and method with dynamic brightness control**
Bilderfassungs-System und Verfahren mit dynamischer Helligkeitssteuerung
Sytème et méthode d'imagerie avec commande dynamique de luminosité

(43) Date of publication of application: 07.02.2001
(73) Proprietor: ITERIS, INC., Anaheim, California 92802 (US); DaimlerChrysler AG, 70327 Stuttgart (DE)
(72) Inventor: Boon, Cathy L., Orange, California 92867 (US); Mehring, Steffi, 74542 Braunsbach (DE)
(74) Representative: Fiener, Josef

(56) References cited:
- PATENT ABSTRACTS OF JAPAN vol. 016, no. 205 (P-1353), 15 May 1992 (1992-05-15) & JP 04 034594 A (SHARP CORP), 5 February 1992 (1992-02-05)
- PATENT ABSTRACTS OF JAPAN vol. 1997, no. 08, 29 August 1997 (1997-08-29) & JP 09 102930 A (MAZDA MOTOR CORP), 15 April 1997 (1997-04-15)
- PATENT ABSTRACTS OF JAPAN vol. 015, no. 476 (E-1140), 4 December 1991 (1991-12-04) & JP 03 204281 A (CANON INC), 5 September 1991 (1991-09-05)

## Description

### Field of the Invention

The present invention relates to systems and methods which provide brightness control processing for images received from an image sensor. More particularly, the present invention relates to imaging systems for optical vehicle safety systems or driver assistance systems.

### Background of the Invention

Electronic imaging systems have long been used to provide images in various applications. One of the primary problems that imaging systems must overcome relates to variable scene brightness within the imager field-of-view. Because the brightness level in a scene to be imaged can often change dramatically, the image sensor must adjust the exposure/gain levels to compensate for the changing brightness level. Slow but very significant variations will obviously occur between day and night operation but more rapid variations may also occur. For example, one application of image sensing systems is in the field of vehicle safety or navigation systems. More particularly, image sensing systems can be used to monitor a vehicle's progress in a desired lane of traffic, and to issue a warning to the driver of the vehicle if it is unintentionally exiting the designated lane. In such applications, extreme and rapid brightness changes in the scene may be experienced due to tunnel exits, irregular shadows on the road, etc., along with the slower variations in brightness due to time of day and weather conditions.

Typically, one of the problems encountered due to brightness variation in the scene to be imaged is that the image sensor only has a certain dynamic range. Without control over image sensor exposure/gain, extreme brightness will thus easily saturate the image sensor while an extremely dark scene will fall below the minimum detectable light level. Therefore, one goal of the system must be to continually modify the exposure/gain settings of the image sensor in accordance with the changing brightness level in the scene.

Typically, the maximum dynamic range of an imaging system is obtained by varying the exposure/gain of the image sensor in the system. Such image sensor based systems are increasingly single chip VLSI devices. Therefore, in one approach to exposure/gain control, the imager chip manufacturer permanently encodes an exposure/gain control algorithm on the chip. In such an approach, the on chip algorithm first counts all pixels in the image which have an intensity greater than a set threshold level of brightness. Based on this count, the on chip algorithm decides whether to increase or decrease the amount of exposure/gain for the sensor. The on chip algorithm may alter the exposure/gain value by either large or small increments, depending on the relative difference between the bright pixel count and the threshold values.

One example of such a prior art imaging chip with on chip brightness compensation is the VV5430 Monolithic Sensor which is manufactured by VLSI Vision, Ltd. in the United Kingdom. This chip counts all pixels in the image which have an intensity greater than a certain Very White Pixel threshold. This prior art approach then changes the exposure and gain settings based on a comparison of this count to fixed brightness thresholds.

In this prior art approach, the exposure/gain is optimized for an entire field-of-view. However, some applications can require optimization only in small region(s) of interest in a scene. If the overall scene brightness is much different from the brightness in the region(s) of interest, the above-described dynamic exposure/gain control method can actually degrade the brightness and contrast in the region(s) of interest in an image.

Another aspect of this prior art approach is that it employs one fixed set of brightness thresholds. These thresholds are chosen to provide images acceptable for most applications in most lighting conditions, but may provide poor quality images in extreme lighting conditions, such as glare, shadows, or overall dark or bright extremes of light. Some applications require images with optimal brightness and contrast even in these extreme conditions, in which case, the above-described method is not adequate.

Also, this prior art approach is designed to adjust for changes in brightness somewhat gradually. In an environment where brightness may be rapidly changing, such adjustments allow for many image frames which are somewhat overexposed or underexposed. For example, glare or shadows moving through a scene may suddenly change the brightness of a portion of the scene very significantly. If the image system is being used in a computer system application where such glare or shadow effect is a factor, the image frames with less than optimal brightness and contrast may need to be either disregarded or processed further using algorithms for correcting severely degraded image quality which can significantly reduce system performance.

JP 04 034 594 A discloses a method and a system for providing brightness control for an image sensor according to the pre-characterizing portions of claims 1 and 5, respectively. However, the background image portions surrounding certain objects of interest are not considered.

Therefore, a need presently exists for a method and a system which provide dynamic brightness control of an image sensor and address the problems noted above.

### SUMMARY OF THE INVENTION

This need is satisfied with a method according to claim 1 and a system according to claim 5, respectively. Preferred embodiments of the invention are subject-matter of the dependent claims.

The present invention provides an imaging system and method for brightness control of an image sensor which optimizes the dynamic range of the sensor for one or more regions of interest within the imager field-of-view.

The present invention further provides an imaging system and method for brightness control of an image sensor which optimizes exposure/gain of the sensor for a wide range of lighting conditions including very dark or very bright.

The present invention further provides an imaging system and method for brightness control of an image sensor which adapts quickly to changing light conditions.

A more complete understanding of the method and apparatus for an image sensor brightness control will be afforded to those skilled in the art, as well as a realization of additional advantages and objects thereof, by a consideration of the following detailed description of the preferred embodiments. Reference will be made to the appended sheets of drawings which will first be described briefly.

### BRIEF DESCRIPTION OF THE DRAWINGS

Fig. 1 is a block diagram of the image brightness control method according to one embodiment of the present invention;
Fig. 2 is a block diagram of the overall architecture of an optical lane departure warning system which includes the image brightness control system and method according to one embodiment of the present invention; and
Figs. 3 and 4 are block diagrams illustrating the image brightness control system and method according to one embodiment of the present invention.

### DETAILED DESCRIPTION OF THE PREFERRED EMBODIMENTS

The present invention provides an imaging system and related method for brightness control of an image sensor. A preferred application is in an optical lane departure warning system, but the invention is not so limited. In the detailed description that follows, like element numerals are used to describe like elements illustrated in one or more of the above-mentioned figures.

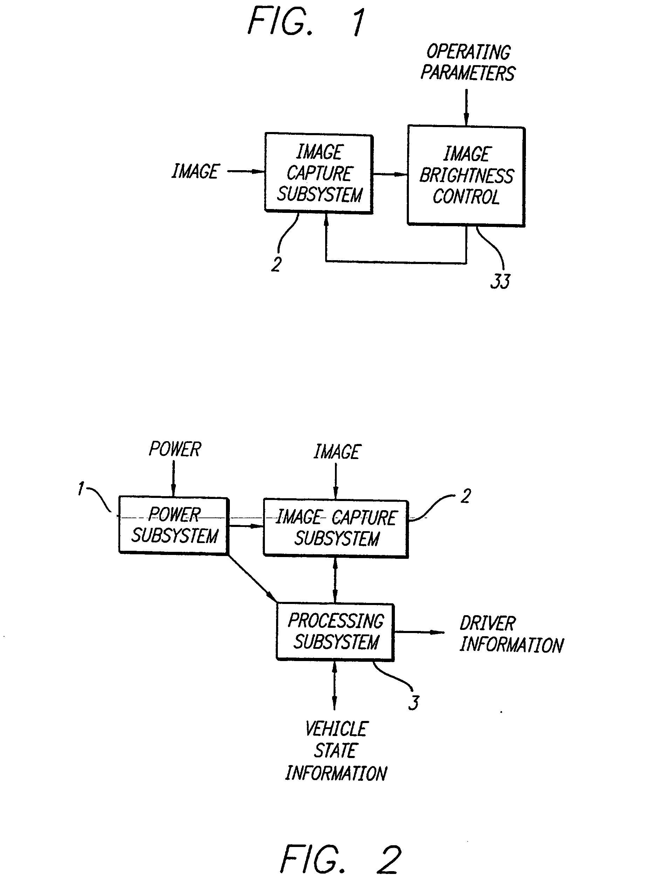

Referring first to Fig. 1, a high-level block diagram of the imaging system is depicted according to one embodiment of the present invention. Image capture subsystem 2 detects light within a scene and provides image data. Image brightness control block 33 operates on said image data using parameters which describe the location(s) and characteristics of one or more regions and objects of interest within a scene. Image brightness control block 33 can control an imager in the image capture subsystem 2 to optimize the brightness and contrast of the desired object(s) of interest within the scene relative to the scene background for the next frame or frames of image data. Image brightness control block 33 includes, in one embodiment, a software implemented control that adjusts various threshold values employed by said imager for exposure/gain setting adjustment. This control is illustrated by the feedback loop in Fig. 1.

To provide a specific environment for discussion of the present invention, one application which will be described is a system which detects when a vehicle drifts out of a traffic lane and provides a warning to the driver of the vehicle. A block diagram of the overall architecture of a lane departure warning system is depicted in Fig. 2 according to one embodiment of the present invention.

Power for the system is input into power subsystem 1. Image capture subsystem 2 receives and detects incoming scene information to create image signals and stores the image data in a buffer for use by processing subsystem 3. Processing subsystem 3 contains the microprocessor, memory, and software for analysis of the image data to determine the vehicle position relative to the traffic lane and for the image brightness control processing. Processing subsystem 3 receives status information from the vehicle and provides information to the vehicle and the driver concerning the warning system status. Processing subsystem 3 also provides information to image capture subsystem 2 to control the capture of succeeding images.

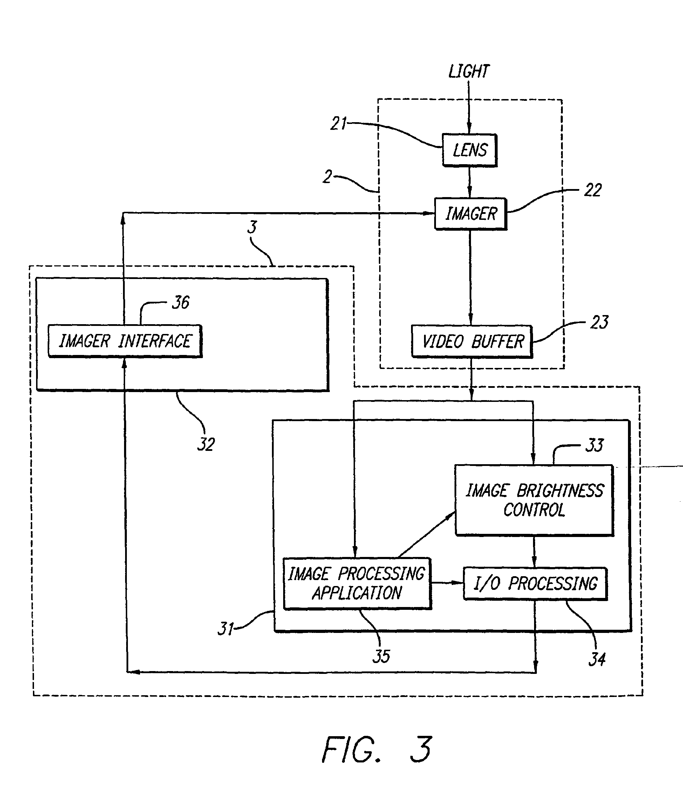

Referring to Fig. 3, image capture subsystem 2 and processing subsystem 3 are shown in more detail in one preferred embodiment of the present invention. Image capture subsystem 2 preferably includes a lens 21, an imager 22, and a video buffer 23. Imager 22 receives the input image focused by lens 21. Imager 22 comprises an imaging device such as a CMOS device or a charge-coupled device (CCD). Such devices are commercially available and in a preferred embodiment, imager 22 may be a single chip imager such as a VV5430 Monolithic Sensor manufactured by VLSI Vision Ltd. Imager 22 sends a signal representing the input image to be stored in video buffer 23 where it may be accessed by processing subsystem 3.

Also as shown in Fig. 3, processing subsystem 3 includes, in one embodiment, a digital signal processor (DSP) 31 and a field programmable gate array (FPGA) 32. DSP 31 preferably implements software including image brightness control block 33, an input/output (I/O) processing block 34, and an image processing application block 35. As noted above, a lane tracking application is merely one example of an application of the present invention. FPGA 32 preferably implements the feedback loop between DSP 31 and imager 22.

Image brightness control block 33 is, in one embodiment of the present invention, implemented in software and operates to determine the brightness of the background of the region(s) of interest in the scene from the image data provided by image capture subsystem 2 and to dynamically control imager 22 to optimize said brightness. More particularly, image brightness control block 33 adjusts various threshold values employed by imager 22 for exposure/gain setting adjustment to optimize the brightness of the desired object(s) of interest relative to the background region(s) in the image including compensating for specific light conditions, such as extreme light or darkness.

For example, when the region(s) of interest is(are) dark compared to the overall image or when the lighting condition is extremely dark, the thresholds are increased, resulting in the overall image becoming more bright while the region(s) of interest has(have) improved brightness and contrast. Similarly, when the region(s) of interest is(are) bright compared to the overall image or when the lighting condition is extremely bright, the thresholds are decreased, resulting in the overall image becoming more dark while the region(s) of interest has(have) improved brightness and contrast. In addition, the threshold values are set so that the exposure/gain can be quickly adapted to changes in lighting conditions. This also results in greater consistency and predictability of image brightness which allow the brightness control method to perform more effectively.

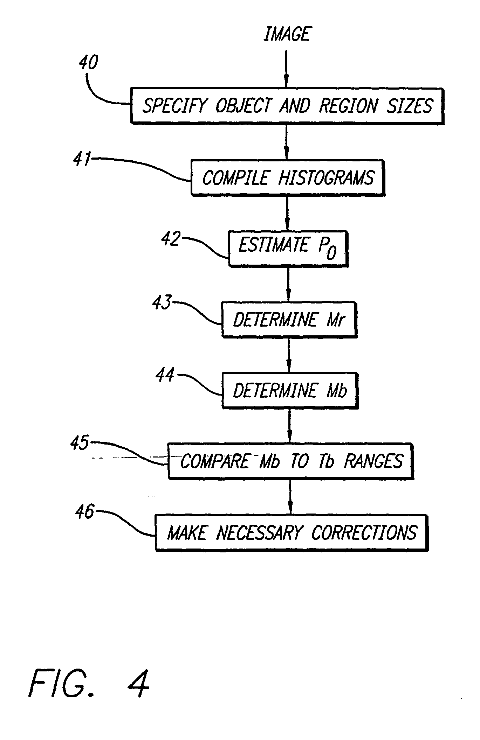

The steps as implemented by image brightness control block 33 are shown in more detail in the flow chart of Fig. 4. In operation, the image brightness control block 33 investigates one or more region(s) in the image which contain one or more objects of interest, said region(s) comprising the background surrounding said object(s) of interest. This investigation may optionally include information provided by the image processing application block 35 (as shown in Fig. 3). In one application of the present invention, the object(s) of interest can be roadway lane marker(s).

The image brightness control block 33 seeks to maintain the maximum background level in the region(s) of interest in the image at a threshold, Tb, within a range, +/- Tw. At block 41, a histogram of pixel intensities in each region of interest is compiled. As depicted at block 42, the number and intensity of image pixels comprising the object(s) of interest, Po, is estimated using knowledge about the objects(s) of interest. The Po object pixels in the histogram are then disregarded. At block 43, the maximum value within the remaining histogram is considered to be the maximum background intensity within each region, Mr. At block 44, the overall background maximum, Mb, is determined by identifying the maximum of all of the Mr. At block 45, the algorithm determines whether Mb is either within Tb +/-Tw or Tb +/- (3*Tw), makes any necessary adjustments to the exposure/gain control thresholds at block 46, and returns the adjusted threshold values to image capture subsystem 2 via a feedback loop as shown.

More specifically, if Mb is within Tb +/- Tw, then the exposure/gain is considered "good", and the threshold values are not changed. If Mb is outside this ideal range, but still within Tb +/- (3*Tw), the exposure/gain is considered "fair", and the threshold values are changed by an amount proportional to (Tb-Mb). Finally, if Mb is outside the "fair" range, the exposure/gain is considered "poor", and the threshold values are adjusted by a maximum amount. In either case, the threshold values are increased when Mb < Tb and decreased when Mb > Tb.

Whenever the threshold values are changed, a certain number of image frames are required to allow the imager 22 to adjust the exposure/gain based on the new threshold values. Therefore, a programmable frame delay is incorporated into the image brightness control loop so that the method described above is performed on every nth image frame. Without this delay, possible overcorrection and rebound can occur yielding images which cycle from overexposed to underexposed and back again.

Lane tracking application block 35 also receives the image data from image capture subsystem 2 and attempts to identify and track roadway lane markings.

As shown in Fig. 3, the brightness control block 33 and lane tracking application block 35 transmit their respective data to the input/output (I/O) processing block 34. The I/O processing block 34 then transmits this information through a feedback loop, which includes in one embodiment interface block 36 in the FPGA 32 back to imager 22 in the image capture subsystem 2.

As noted above, although the lane tracking application block 35 implements a preferred example of the present invention, the present invention is not so limited. Suitable modifications may be made in the dynamic brightness control block 33 described above to accommodate such other applications.

Having thus described a preferred embodiment of an image sensing system and method having dynamic brightness control, it should be apparent to those skilled in the art that certain advantages of the within system have been achieved. It should also be appreciated that various modifications, adaptations, and alternative embodiments thereof may be made within the scope of the present invention. The invention is further defined by the following claims.

## Claims

1. A method of brightness control for an image sensor (2), said method comprising the steps of:
receiving image data of an image from said image sensor (2);
identifying one or more objects of interest in said image;
detecting the brightness level of at least a portion of the image; and
determining an adjusted brightness level of said portion of the image
**characterized by**:
said portion of the image comprising the background image region(s) surrounding said object(s) of interest;
optimizing the brightness of said object(s) of interest in relation to the background region(s) in the image surrounding the object(s) of interest; and
controlling said image sensor (2) to alter said brightness level of said portion of the image to said adjusted brightness level.

2. A method as set out in claim 1, wherein said portion of the image corresponds to the background.

3. A method as set out in claim 1, wherein said image sensor (2) comprises an imaging chip (22) having exposure/gain settings and wherein said controlling step alters said settings.

4. A method as set out in claim 1, wherein said image sensor (2) comprises an imaging chip (22) having exposure/gain settings and having an on chip exposure/gain control algorithm wherein said controlling step alters parameters used by said on chip algorithm to effect alteration of said exposure/gain settings.

5. An imaging system with dynamic brightness control, said system comprising:
an image sensor (2) for providing image data of a scene;
means (33) for identifying one or more objects of interest in said image;
means (33) for detecting a brightness level of at least a portion of the image; and
means (33) for determining an adjusted brightness level of said portion of the image;
**characterized by**:
said portion of the image comprising the background image region(s) surrounding said object(s) of interest;
means (33) for optimizing the brightness of said object(s) of interest in relation to the background region(s) in the image surrounding the object(s) of interest; and
control means (31), coupled to the image sensor (2), for controlling the image sensor (2) to alter said brightness level of said portion of the image to said adjusted brightness level.

6. The imaging system as set out in claim 5, wherein said image sensor (2) comprises:
an imaging chip (22) for detecting said image and providing image signals.

7. The imaging system as set out in claim 6, wherein the imaging chip (22) includes adjustable exposure/gain settings and wherein the control means (31) adjusts the exposure/gain settings of the imaging chip (22).

8. The imaging system as set out in claim 6, wherein the imaging chip (22) includes adjustable exposure/gain settings and wherein the imaging chip (22) further includes an on chip exposure/gain control algorithm and wherein the control means (31) adjusts the parameters used by said on chip algorithm to effect alteration of the exposure/gain settings of the imaging chip (22).

9. The imaging system as set out in claim 6, wherein said image sensor (2) further includes a video buffer (23) for storing digital image data.

10. The imaging system as set out in claim 5, wherein said portion of the image comprises the background portion surrounding the object(s) of interest and wherein said adjusted brightness level is chosen to maintain the brightness level of said background at or below a desired threshold.

11. The imaging system as set out in claim 7, wherein the control means (31) dynamically controls the imaging chip settings on a frame by frame basis.

12. The imaging system as set out in claim 8, wherein the control means (31) dynamically controls the imaging chip settings on a frame by frame basis.

13. The imaging system as set out in claim 5, wherein the means (33) for detecting only examines the image data corresponding to a portion of the image data having a brightness level below a threshold value.

## Patentansprüche

1. Verfahren zur Helligkeitssteuerung für einen Bildsensor (2), wobei das Verfahren die Schritte umfasst:
- Empfangen von Bilddaten eines Bildes von dem Bildsensor (2);
- Identifizieren von einem oder mehr Interessensobjekten in dem Bild;
- Erfassen des Helligkeitspegels wenigstens eines Teilbereichs des Bildes; und
- Bestimmen eines eingestellten Helligkeitspegels des Teilbereichs des Bildes;
**gekennzeichnet durch**
- Umfassen der das/die Interessensobjekt(e) umgebende(n) Hintergrund-Bildregion(en) durch den Teilbereich des Bildes;
- Optimieren der Helligkeit des/der Interessensobjekte/s in Bezug auf die Hintergrundregion(en) in dem das/die Interessensobjekt(e) umgebenden Bild; und
- Steuern des Bildsensors (2), um den Helligkeitspegel des Teilbereichs des Bildes auf den eingestellten Helligkeitspegel zu ändern.

2. Verfahren gemäß Anspruch 1, wobei der Teilbereich des Bildes dem Hintergrund entspricht.

3. Verfahren gemäß Anspruch 1, wobei der Bildsensor (2) einen Abbildungschip (22) umfasst, der Belichtungs-Nerstärkungseinstellungen aufweist und wobei der Steuerungsschritt diese Einstellungen ändert.

4. Verfahren gemäß Anspruch 1, wobei der Bildsensor (2) einen Abbildungschip (22) umfasst, der Belichtungs-Nerstärkungseinstellungen aufweist und einen chipintegrierten Belichtungs-/Verstärkungssteueralgorithmus aufweist, wobei der Steuerungsschritt von dem chipintegrierten Algorithmus verwendete Parameter ändert, um eine Änderung der Belichtungs-/Verstärkungseinstellungen zu bewirken.

5. Abbildungssystem mit dynamischer Helligkeitssteuerung, wobei das System umfasst:
- einen Bildsensor (2) zum Bereitstellen von Bilddaten einer Szene;
- Mittel (33) zum Identifizieren von einem oder mehr Interessensobjekten in dem Bild;
- Mittel (33) zum Erfassen eines Helligkeitspegels wenigstens eines Teilbereichs des Bildes; und
- Mittel (33) zum Bestimmen eines eingestellten Helligkeitspegels des Teilbereichs des Bildes;
**gekennzeichnet durch**
- den Teilbereich des Bildes, der die das/die Interessensobjekt(e) umgebende(n) Hintergrund-Bildregion(en) umfasst;
- Mittel (33) zum Optimieren der Helligkeit des/der Interessensobjekte/s in Bezug auf die Hintergrundregion(en) in dem das/die Interessensobjekt(e) umgebenden Bild; und
- an den Bildsensor (2) gekoppelte Steuermittel (31) zur Steuerung des Bildsensors (2), um den Helligkeitspegel des Teilbereichs des Bildes auf den eingestellten Helligkeitspegel zu ändern.

6. Abbildungssystem gemäß Anspruch 5, wobei der Bildsensor (2) einen Abbildungschip (22) zum Erfassen des Bildes und Bereitstellen von Bildsignalen umfasst.

7. Abbildungssystem gemäß Anspruch 6, wobei der Abbildungschip (22) justierbare Betichtungs-/Verstärkungseinstei!ungen einschließt und die Steuereinrichtung (31) die Belichtungs-Nerstärkungseinstellungen des Abbildungschips (22) justiert.

8. Abbildungssystem gemäß Anspruch 6, wobei der Abbildungschip (22) justierbare Belichtungs-Nerstärkungseinstellungen einschließt und der Abbildungschip (22) ferner einen chipintegrierten Belichtungs-/Verstärkungssteueralgorithmus einschließt und wobei die Steuereinrichtung (31) die von dem chipintegrierten Algorithmus verwendeten Parameter einstellt, um die Änderung der Belichtungs-/Verstärkungseinstellungen des Abbildungschips (22) zu bewirken.

9. Abbildungssystem gemäß Anspruch 6, wobei der Bildsensor (2) ferner einen Bildwiederholspeicher (23) zum Speichern digitaler Bilddaten einschließt.

10. Abbildungssystem gemäß Anspruch 5, wobei der Teilbereich des Bildes den das/die Interessensobjekt(e) umgebenden Hintergrund-Teilbereich umfasst und der eingestellte Helligkeitspegel so gewählt ist, dass der Helligkeitspegel des Hintergrunds an oder unterhalb einer gewünschten Schwelle bleibt.

11. Abbildungssystem gemäß Anspruch 7, wobei die Steuereinrichtung (31) die Abbildungschipeinstellungen auf einer Bild-für-Bild-Basis dynamisch steuert.

12. Abbildungssystem gemäß Anspruch 8, wobei die Steuereinrichtung (31) die Abbildungschipeinstellungen auf einer Bild-für-Bild-Basis dynamisch steuert.

13. Abbildungssystem gemäß Anspruch 5, wobei die Einrichtung (33) zum Erfassen nur die Bilddaten prüft, die einem Teil der Bilddaten entsprechen, die einen Helligkeitspegel unterhalb eines Schwellenwertes aufweisen.

## Revendications

1. Procédé de contrôle de la luminosité pour un capteur d'image (2), lequel procédé comprend les étapes de :
réception de données d'image d'une image depuis ledit capteur d'image (2) ;
identification d'un ou plusieurs objets d'intérêt dans ladite image ;
détection du niveau de luminosité d'au moins une partie de l'image ; et
détermination d'un niveau de luminosité ajusté de ladite partie de l'image ;
**caractérisé en ce que** :
ladite partie de l'image comprend la ou les régions d'image de fond entourant ledit ou lesdits objets d'intérêt ;
la luminosité dudit ou desdits objets d'intérêt est optimisée par rapport à la région ou aux régions de fond de l'image entourant le ou les objets d'intérêt ; et
ledit capteur d'image (2) est commandé de manière à modifier ledit niveau de luminosité de ladite partie de l'image audit niveau de luminosité ajusté.

2. Procédé selon la revendication 1, dans lequel ladite partie de l'image correspond au fond.

3. Procédé selon la revendication 1, dans lequel ledit capteur d'image (2) comporte une puce d'imagerie (22) avec des paramètres d'exposition et de gain et dans lequel ladite étape de commande modifie lesdits réglages.

4. Procédé selon la revendication 1, dans lequel ledit capteur d'image (2) comporte une puce d'imagerie (22) avec des paramètres d'exposition et de gain et un algorithme de contrôle de l'exposition et du gain, ladite étape de contrôle modifiant les paramètres utilisés par ledit algorithme pour modifier lesdits paramètres d'exposition et de gain.

5. Système d'imagerie doté d'un contrôle dynamique de la luminosité, lequel système comprend :
un capteur d'image (2) destiné à fournir les données d'image d'une scène ;
un moyen (33) pour identifier un ou plusieurs objets d'intérêt dans ladite image ;
un moyen (33) pour détecter un niveau de luminosité d'au moins une partie de l' image ; et
un moyen (33) pour déterminer un niveau de luminosité ajusté de ladite partie de l'image ;
**caractérisé en ce que** :
ladite partie de l'image comprend la ou les régions d'image de fond qui entourent ledit ou lesdits objets d'intérêt ;
un moyen (33) est prévu pour optimiser la luminosité dudit ou desdits objets d'intérêt par rapport aux régions de fond de l'image entourant le ou les objets d'intérêt ; et
un moyen de contrôle (31) est couplé au capteur d'image (2) pour commander le capteur d'image (2) afin de modifier ledit niveau de luminosité de ladite partie de l'image audit niveau de luminosité ajusté.

6. Système d'imagerie selon la revendication 5, dans lequel ledit capteur d'image (2) comprend une puce d'imagerie (22) pour détecter ladite image et fournir des signaux d'image.

7. Système d'imagerie selon la revendication 6, dans lequel la puce d'imagerie (22) comporte des paramètres réglables d'exposition et de gain et dans lequel le moyen de contrôle (31) règle les paramètres d'exposition et de gain de la puce d'imagerie (22).

8. Système d'imagerie selon la revendication 6, dans lequel la puce d'imagerie (22) comporte des paramètres réglables d'exposition et de gain et dans lequel la puce d'imagerie (22) comprend en outre un algorithme sur puce de contrôle de l'exposition et du gain et dans lequel le moyen de contrôle (31) règle les paramètres utilisés par ledit algorithme sur puce pour modifier les paramètres d'exposition et de gain de la puce d'imagerie (22).

9. Système d'imagerie selon la revendication 6, dans lequel ledit capteur d'image (2) comprend en outre un tampon vidéo (23) pour mémoriser des données d'image numériques.

10. Système d'imagerie selon la revendication 5, dans lequel ladite partie de l'image comprend la partie de fond entourant le ou les objets d'intérêt et dans lequel ledit niveau de luminosité ajusté est choisi de manière à maintenir le niveau de luminosité dudit fond à un seuil souhaité ou en dessous de celui-ci.

11. Système d'imagerie selon la revendication 7, dans lequel le moyen de contrôle (31) contrôle les paramètres de la puce d'imagerie de manière dynamique image par image.

12. Système d'imagerie selon la revendication 8, dans lequel le moyen de contrôle (31) contrôle les paramètres de la puce d'imagerie de manière dynamique image par image.

13. Système d'imagerie selon la revendication 5, dans lequel le moyen (33) de détection examine seulement les données d'image correspondant à une partie des données d'image ayant un niveau de luminosité inférieur à une valeur de seuil.
